# EUROPEAN PATENT APPLICATION

(11) **EP 4 483 840 A1**
(43) Date of publication of application: **01.01.2025**
(21) Application number: 23203734.1
(22) Date of filing: 16.10.2023
(51) Int. Cl.: A61C 13/083, A61C 13/09

(54) **A MULTILAYER DENTAL RESTORATION WITH IMPROVED ESTHETICAL AND MECHANICAL PROPERTIES**

(30) Priority: 28.06.2023 EP 23182054
(71) Applicant: DeguDent GmbH, 63457 Hanau (DE); DENTSPLY SIRONA Inc., York, PA 17401 (US)
(72) Inventor: Völkl, Lothar, 63457 Hanau (DE); Fecher, Stefan, 63457 Hanau (DE)
(74) Representative: Pichova, Vanda

(57) **Abstract**

A dental restoration (1), wherein the dental restoration comprises zirconium dioxide stabilized with at least one stabilizing oxide, wherein the dental restoration (1) comprises a dentin (3), an incisal (4) and at least one transition region (5), wherein the dentin (3) extends within the incisal (4), wherein the dentin (3) and the incisal (4)) comprise each at least one shading oxide of a metal element, wherein the dental restoration is produced from a blank (1'), wherein the blank comprises a core region (3'), a shell region (4'), wherein the core region (3') and the shell region (4') comprise each at least one shading oxide of a metal element, wherein in at least one horizontal plane (9) of the dental restoration (1) there are at least three sections of different composition, translucency, chromaticity and mechanical properties.

## Description

### BACKGROUND OF THE INVENTION

The invention relates, inter alia, to a dental restoration such as a dental framework, in particular a dental crown, a dental bridge, an inlay, an onlay, a veneer, an abutment or an abutment crown, comprising zirconium dioxide, having preferably sections of different composition, translucency, chromaticity and mechanical properties in at least one horizontal plane of the dental restoration and comprising at least one transition region.

The natural tooth comprises two regions, called a dentin and an incisal. The incisal has higher translucency than the dentin. In order to produce a dental restoration reflecting the properties of the natural tooth, it is necessary to provide a dental restoration with different translucencies and mechanical properties in the planes which are perpendicular to the vertical axis of the tooth, i.e. in the horizontal planes.

Dental restorations comprising zirconium dioxide of the state of the art are produced from monochromatic or 2D-multilayer zirconium dioxide blanks. In other words : in any of the points of any of the horizontal planes of such a dental restoration, there is the same composition, the same mechanical properties and the same translucency. Such dental restorations face the problem that they need to be compounded or coloured to reach the desirable esthetical effect, i.e. the translucency and appearance of the natural tooth and the desirable mechanical properties.

Dental restorations of the state of the art also face the problem that the differences in the translucency, chromaticity and mechanical properties between the main regions of the dental restoration, i.e. the dentin, the incisal and optionally the intermediate layer are too prominent. It is an object of the present invention to alleviate this drawback.

It is an object of the present invention to provide a multilayer dental restoration with improved esthetical and mechanical properties.

US 9,649,179 of B&D Dental Corporation discloses a blank and a dental restoration comprising three layers A, B and C, wherein within each of the three layers there is a homogenous composition lacking in any sections of different translucency, chromaticity, appearance or mechanical properties.

**Restoration** in the sense of the present invention is a dental restoration.

**Transition region** in the sense of the present invention is a region created by diffusion of metal cations of at least one shading oxide during sintering. It is therefore a region which does not have a fixed composition.

**Shading oxide** in the sense of this invention is an oxide of a metal element.

**Metal element** in the sense of the present invention is a metal element according to the periodic table of chemical elements.

**Horizontal plane** is the sense of this invention is a plane which is perpendicular to the vertical axis of the dental restoration.

**Core region** of the blank is a region which corresponds to the dentin of the dental restoration.

**Shell region** of the blank is a region which corresponds to the incisal of the dental restoration.

### DESCRIPTION OF THE FIGURES

Fig. 1 depicts a vertical cross section view of the dental restoration (1) comprising a dentin (3), an incisal (4), a transition region (5a), a horizontal plane (9a), a horizontal plane (9b) and a horizontal plane (9c).
Fig. 1a depicts a horizontal cross section view of the dental restoration (1) in the horizontal plane (9a) comprising a section (63), a section (64) and a section (65a).
Fig. 1b depicts a horizontal cross section view of the dental restoration (1) in the horizontal plane (9b) comprising a section (64) and a section (65a).
Fig. 1c depicts a horizontal cross section view of the dental restoration (1) in the horizontal plane (9c) comprising a section (64).
Fig. 2 depicts a vertical cross section view of the dental restoration (1) comprising a dentin (3),an incisal (4), an intermediate layer (8), transition regions (5b) and (5c) , a horizontal plane (9a), a horizontal plane (9b) and a horizontal plane (9c).
Fig. 2a depicts a horizontal cross section view of the dental restoration (1) in the horizontal plane (9a) comprising a section (63) , a section (64), a section (68), a section (65b) and a section (65c).
Fig.2b depicts a horizontal cross section view of the dental restoration (1) in the horizontal plane (9b) comprising a section (64), a section (68) and a section (65c).
Fig. 2c depicts a horizontal cross section view of the dental restoration (1) in the horizontal plane (9c) comprising a section (64).
Fig. 3 depicts a vertical cross section view of the dental restoration (1) comprising two layers (3a) and (3b) of the dentin, an incisal (4), transition regions (5d) and (5e) , a horizontal plane (9a), a horizontal plane (9b) and a horizontal plane (9c).
Fig. 3a depicts a horizontal cross section view of the dental restoration (1) in the horizontal plane (9a) comprising a section (63a), a section (63b) , a section (64), a section (65d), and a section (65e).
Fig.3b depicts a horizontal cross section view of the dental restoration (1) in the horizontal plane (9b) comprising a section (64), a section (63b) and a section (65e).
Fig.3c depicts a horizontal cross section view of the dental restoration (1) in the horizontal plane (9c) comprising a section (64).
Fig. 4 depicts a horizontal cross section view of the dental restoration (1) with depicted translucency, flexural strength and chromaticity in the horizontal plane (9a). Sections (63), (64) and (65a) are depicted. This cross section view corresponds to the cross section view of the Fig. 1a.
Fig. 5 depicts a horizontal cross section view of the dental restoration (1) with depicted translucency, flexural strength and chromaticity in the horizontal plane (9b). Sections (64) and (65a) are depicted. This cross section view corresponds to the cross section view of the Fig. 1b.
Fig. 6 depicts a horizontal cross section view of the dental restoration (1) with depicted translucency, flexural strength and chromaticity in the horizontal plane (9c). Section (64) is depicted. This cross section view corresponds to the cross section view of the Fig. 1c.
Fig. 7 depicts a horizontal cross section view of the dental restoration (1) with depicted hardness in the horizontal planes (9a) and (9b). Sections (63), (64) and (65a) are depicted.

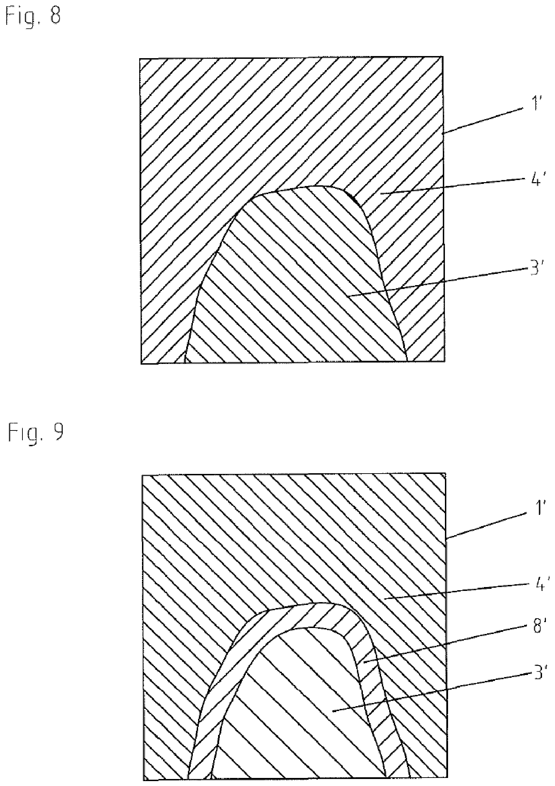

Fig. 8 depicts a vertical cross section view of the blank (1') comprising a core region (3'), and a shell region (4').
Fig. 9 depicts a vertical cross section view of the blank (1') comprising a core region (3'), an intermediate layer (8') and a shell region (4').

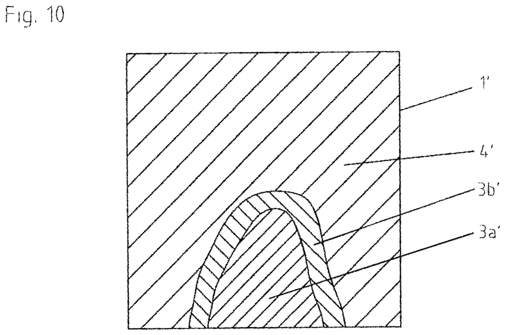

Fig. 10 depicts a vertical cross section view of the blank (1') comprising a core region layer (3a'), a core region layer (3b') and a shell region (4').

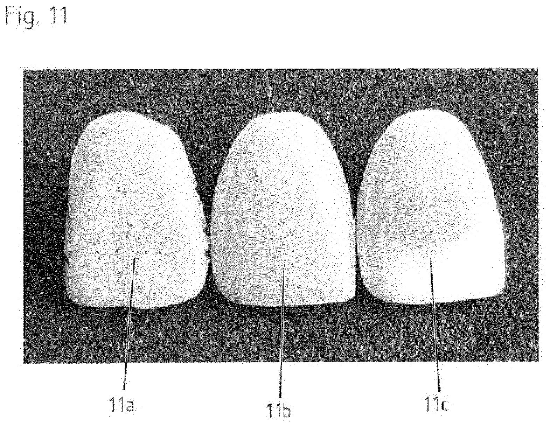

Fig. 11(a photo) depicts dental restorations 11(a),11(b) and 11(c), wherein 11(a) represents a dental restoration, wherein the difference in the total concentration of the at least one shading oxide between single regions of the corresponding blank is 200 ppm, 11(b) represents a dental restoration wherein the difference in the total concentration of the at least one shading oxide between single regions of the corresponding blank is 5,547 ppm and (c) represents a dental restoration wherein the difference in the total concentration of the at least one shading oxide between single regions of the corresponding blank is 12,322 ppm.

### DETAILED DESCRIPTION OF THE INVENTION

The natural tooth comprises two layers, called a dentin and an incisal. The incisal has higher translucency than the dentin. In order to produce a dental restoration reflecting and copying the translucency, chromaticity and mechanical properties map of the natural tooth, it is desirable to provide a dental restoration with sections of different translucency, chromaticity and mechanical properties in the planes which are perpendicular to the vertical axis of the tooth, i.e. in the horizontal planes.

It is also an aspect of the present invention to provide a dental restoration with a gentle gradient of translucency, chromaticity and mechanical properties between the main regions of the dental restoration, i.e. the dentin, the incisal and optionally also the intermediate layer.

In the preferred embodiment of the present invention, the dental restoration comprises at least three regions of different composition.

A different composition results in different translucency, chromaticity and mechanical properties, including flexural strength and hardness.

In the preferred embodiment of the present invention, the dental restoration comprises at least three sections of different composition, translucency, chromaticity and mechanical properties in at least one horizontal plane.

The different translucency is created by a different amount of Y₂O₃ or another stabilizing oxide in the composition.

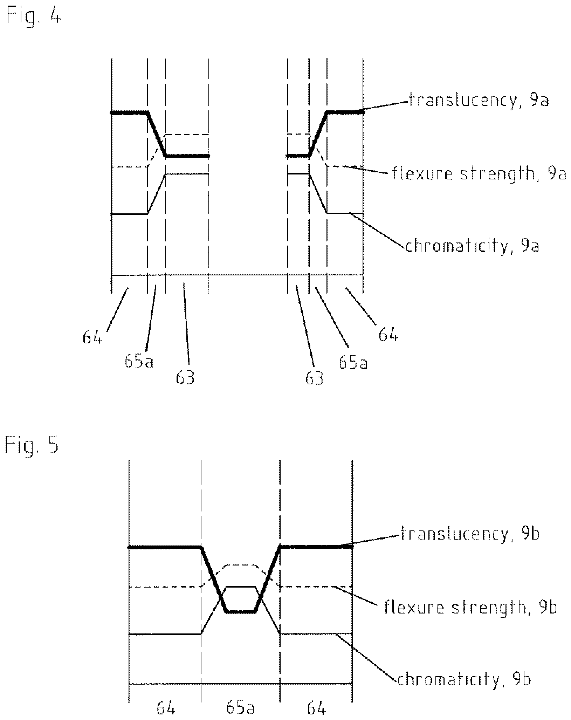

Translucency and chromaticity behave in the horizontal planes as antagonists, i.e. the higher translucency, the lower chromaticity and the lower translucency, the higher chromaticity. This behaviour has been depicted in Fig. 4, Fig. 5 and Fig. 6.

Translucency and flexural strength behave in the horizontal planes as antagonists as well, i.e. the higher translucency, the lower flexural strength and the lower translucency, the higher flexural strength. This behaviour has been depicted in Fig. 4, Fig. 5 and Fig. 6.

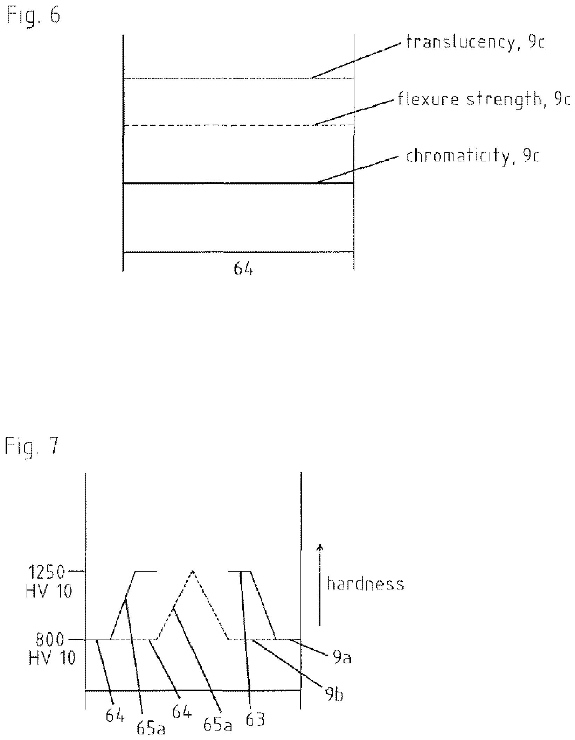

Hardness in the horizontal planes (9a) and (9b) has been depicted in Fig. 7. The hardness is in the range of 800-1,250 HV 10 and was measured with the Vickers hardness test using a Vickers hardness testing device.

It is an object of the present invention to provide a dental restoration (1) such as a dental framework, in particular a dental crown, a dental bridge, an inlay, an onlay, a veneer, an abutment or an abutment crown. The dental composition (1) comprises zirconium dioxide stabilized with at least one stabilizing oxide.

The dental restoration (1) preferably comprises a dentin (3), an incisal (4) and at least one transition region (5).

Transition region is a region created by diffusion of metal cations of at least one shading oxide during sintering. It is therefore a region which does not have a fixed composition.

The dentin (3) preferably extends within the incisal (4).

The dentin (3) and the incisal (4) comprise each at least one shading oxide of a metal element.

The dental restoration (1) is produced from a blank (1'), the blank comprises a core region (3') and a shell region (4') ; the core region (3') and the shell region (4') comprise each at least one shading oxide of a metal element.

In at least one horizontal plane (9) of the dental restoration (1) there are at least three sections of different composition, translucency, chromaticity and mechanical properties.

In the preferred embodiment of the present invention, the at least one horizontal plane (9) is selected from the group comprising (9a), (9b), (9c) and combinations thereof.

In the preferred embodiment of the present invention, there are three horizontal planes (9a), (9b) and (9c).

In the preferred embodiment of the present invention, the at least one transition region (5) is selected from the group comprising (5a), (5b), (5c), (5d) , (5e) and combinations thereof.

In one embodiment of the present invention, the dental restoration as defined above comprises a transition region (5a) between the dentin (3) and the incisal (4). In such a case, the horizontal plane (9a) comprises sections of different composition, translucency, chromaticity and mechanical properties (63), (64) and (65a), the horizontal plane (9b) comprises sections of different composition, translucency, chromaticity and mechanical properties (65a) and (64) and the horizontal plane (9c) comprises a section of a different composition, translucency, chromaticity and mechanical properties (64). In such a case, a blank comprises a core region (3') and a shell region (4').

In another embodiment of the present invention, the dental restoration (1) comprises additionally an intermediate layer (8) between the dentin (3) and the incisal (4). In such a case, the dental restoration (1)comprises a transition region (5b) between the dentin (3) and an intermediate layer (8) and a transition region (5c) between the intermediate layer (8) and the incisal (4). The horizontal plane (9a) comprises sections of different composition, translucency, chromaticity and meachanical properties (63), (65b), (68), (65c) and (64), the horizontal plane (9b) comprises sections of a different composition, translucency, chromaticity and mechanical properties (64), (68) and (65c) and the horizontal plane (9c) comprises a section of a different composition, translucency, chromaticity and mechanical properties (64). In such a case, the blank (1') comprises a core region (3'), a shell region (4') and an intermediate layer (8').

In yet another embodiment of the present invention, the dental restoration (1) comprises two layers (3a) and (3b) of the dentin. In such a case, the dental restoration comprises a transition region (5d) between the two layers (3a) and (3b) of the dentin and a transition region (5e) between the layer (3b) and the incisal (4). The horizontal plane (9a) comprises sections of different composition, translucency, chromaticity and mechanical properties (63a), (63b), (64) and (65d) and (65e), the horizontal plane (9b) comprises sections of a different composition, translucency, chromaticity and mechanical properties (64), (63b) and (65e) and the horizontal plane (9c) comprises a section of a different composition, translucency, chromaticity and mechanical properties (64). In such a case, the blank (1') comprises a shell region (4') and two layers (3a') and (3b') of the core region.

The transition regions (5a), (5b), (5c), (5d), (5d), (5e) and (5f) are the following transition regions:

| Transition region | Definition |
|---|---|
| (5a) | A transition region between the dentin (3) and the incisal (4) |
| (5b) | A transition region between the dentin (3) and the intermediate layer (8) |
| (5c) | A transition region between the intermediate layer (8) and the incisal (4) |
| (5d) | A transition region between the layers (3a) and (3b) of the dentin |
| (5e) | A transition region between the layer (3b) of the dentin and the incisal (4) |

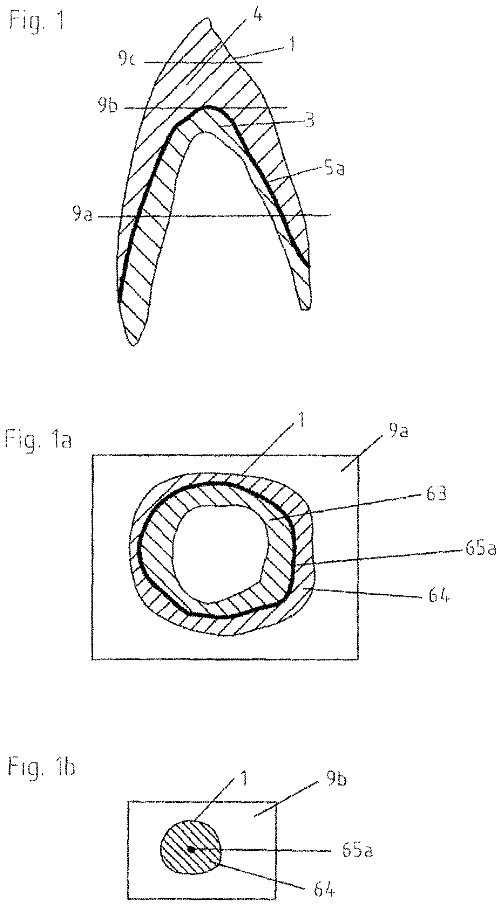

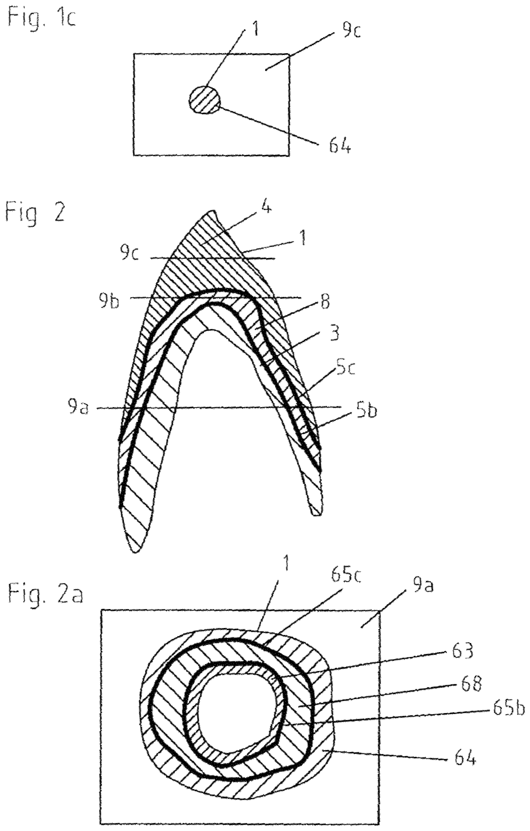

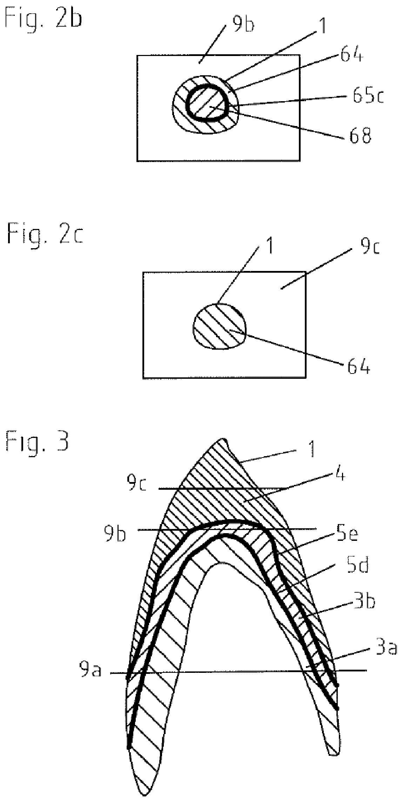

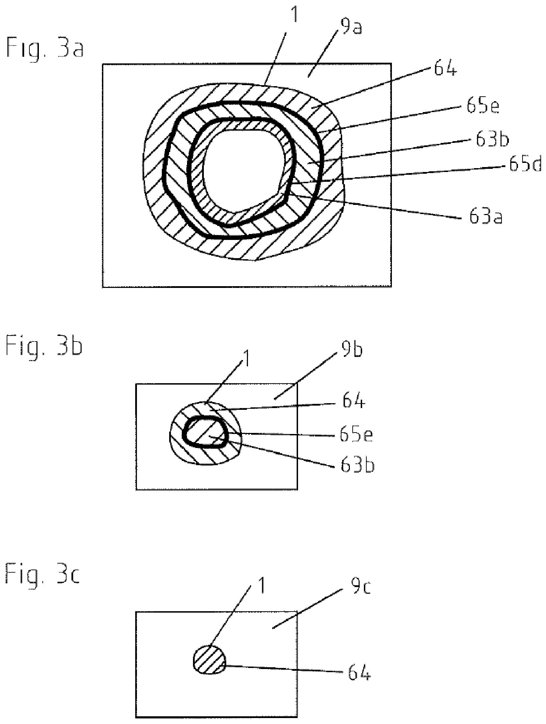

The horizontal planes 9(a), (9b) and (9c) are depicted in the Figures 1-7.

Within the horizontal planes 9(a), (9b) and (9c) of the dental restoration (1), the composition of the single sections (63), (63a), (63b), (64), (65a), (65b), (65c), (65d), (65e) and (68) is a composition of the single layers and regions of the dental restoration as follows:
The composition of the section (63) is a composition of the dentin (3).

The composition of the section (63a) is a composition of the dentin layer (3a).

The composition of the section (63b) is a composition of the dentin layer (3b).

The composition of the section (64) is a composition of the incisal (4).

The composition of the section (65a) is a composition of the transition region(5a).

The composition of the section (65b) is a composition of the transition region (5b).

The composition of the section (65c) is a composition of the transition region (5c).

The composition of the section (65d) is a composition of the transition region (5d).

The composition of the section (65e) is a composition of the transition region (5e).

The composition of the section (68) is a composition of the intermediate layer (8).

The dental restoration (1) is produced from a blank (1'), which is produced by pressing the green body in a press.

In the preferred embodiment of the present invention, the length of the blank (1') is 21mm, the width is 20 mm and height is 16mm.

The dental restoration (1) which is milled out of the blank (1'), can be sintered at the temperatures of 1,200-1,600°C. By sintering, the chemical composition of the dentin (3) (optionally of the two layers (3a) and (3b) of the dentin), the incisal (4) and optionally of the intermediate layer (8) changes, which results in changes in translucency, chromaticity and mechanical properties. Sintering also results in formation of transition regions.

During the sintering process, at the temperature of 1,200- 1,600°C, metal cations of the at least one shading oxide diffuse by a solid-state diffusion process. It means that they migrate. This leads to the change of the concentration of the at least one shading oxide. At least one transition region selected from the group comprising (5a), (5b), (5c), (5d) and (5e) is formed with a concentration gradient of the at least one shading oxide. The concentration gradient of the at least one shading oxide creates a shade gradient. The transition region does not have a fixed concentration of the at least one shading oxide.

The composition and the size of the at least one transition region depends on the concentration of the at least one shading oxide in the core region (3'), (optionally two layers (3a') and (3b') of the core region), the shell region (4') and optionally also in the intermediate layer (8') of the blank (1').

If the blank (1') comprises a core region (3'), a shell region (4') and the intermediate layer (8'), then the difference in the total of the concentration of the at least one shading oxide between any of the core region (3'), the shell region (4') and the intermediate layer (8') of the blank (1') is preferably in the range of 400- 4,500ppm , more preferably 800-3,900 ppm.

In case the blank (1') comprises a core region (3') and the shell region (4'), then the preferred difference in the total of concentration of the at least one shading oxide between the two regions is in the range of 400-10,000 ppm, more preferably 800-6,500 ppm.

If the difference in the total of the concentration of the at least one shading oxide between any of the regions and layers of the blank (1') is out of the above range(s), the human eye can see a sharp difference between the single regions and layers of the final dental restoration (1) or cannot see any difference at all, both of them being undesirable. If the difference in the total concentration of the at least one shading oxide between any of the regions and layers of the blank (1') is in the said range(s), the shade gradient appears homogenous and the human eye can see that the transition between single regions and layers of the dental restoration (1) is much milder, less perceivable and corresponds to that of the natural tooth.

Table 1 depicts concentrations of single shading oxides in single regions of the blanks 11a',11b' and 11c', which correspond to the dental restorations 11a, 11b and 11c of the Figure 11. The unit of the concentration is ppm.

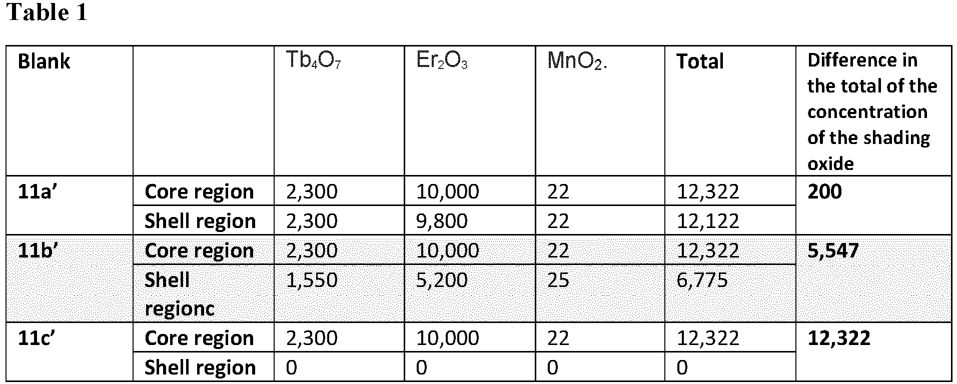

The Figure 11 clearly demonstrates that if the difference in the total of the concentration of the at least one shading oxide between the two regions of the blank (1') is in the above defined range(s), the shade gradient is homogenous and the human eye can see that the transition between single regions and layers of the dental restoration (1) is much milder, less perceivable and corresponds to that of the natural tooth (restoration 11(b)). If the difference in the total of the concentration of the at least one shading oxide between the two regions of the blank (1') is out of the above range(s), the human eye can see a very sharp difference between the single regions and layers of the final dental restoration (1) ( 11 ( c)) or cannot see any difference at all (11 (a)) , both of them being undesirable.

Table 2 depicts concentration of single shading oxides in single regions of the blank (1') in ppm. Blanks I-III are blanks comprising a core region (3'), a shell region (4') and an intermediate layer (8'). Blanks IV-VIII are blanks comprising a core region (3') and a shell region (4').

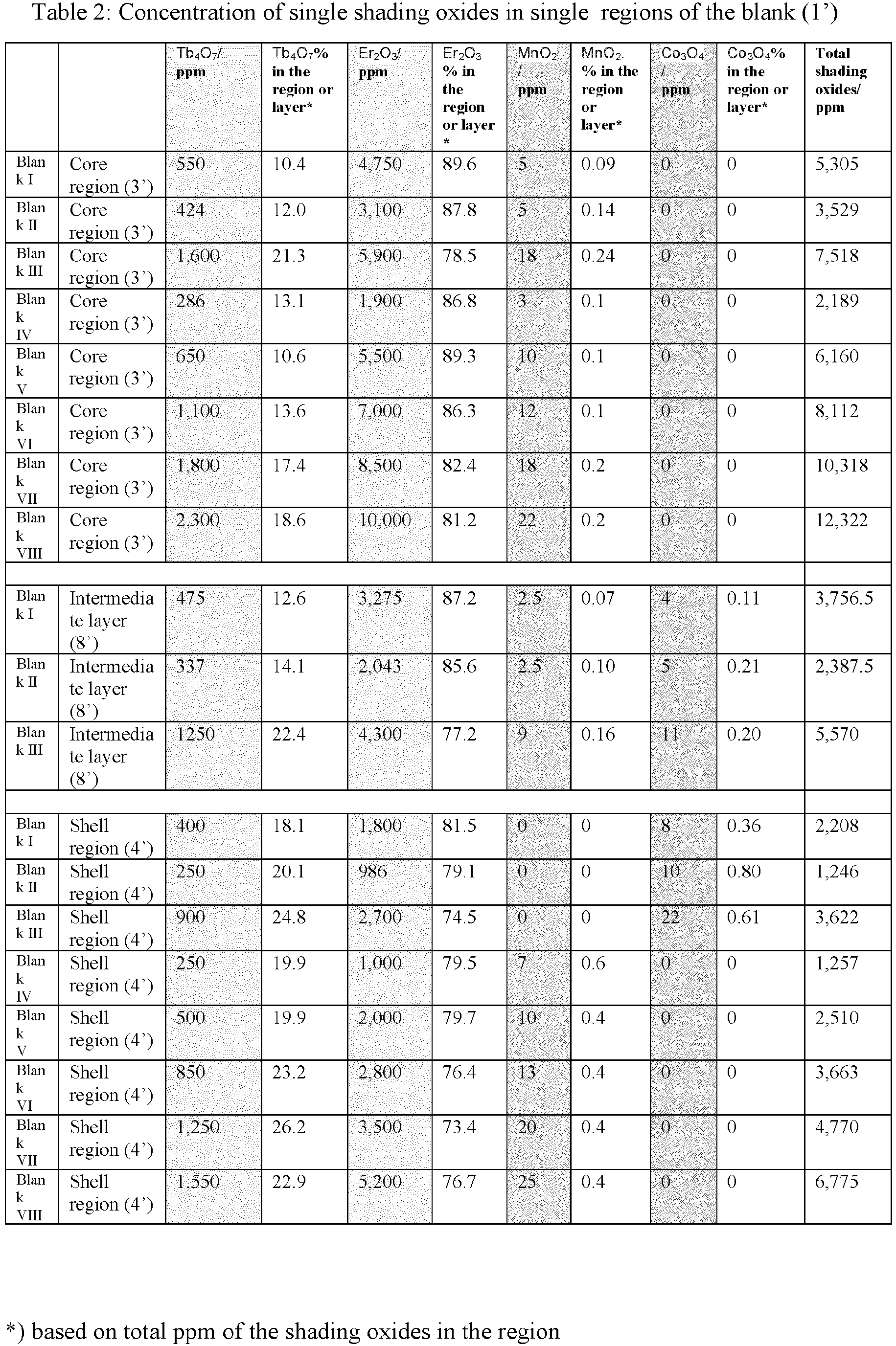

If the blank (1') comprises a core region (3'), a shell region (4') and an intermediate layer (8'), the following is preferably valid about the concentration of single shading oxides in single regions and the intermediate layer: the concentration of Tb₄O₇ in the core region (3') of the blank (1') is 8-25%, more preferably 10-22%, in the intermediate layer (8') it is 10-25 %, most preferably 12-23 % and in the shell region (4') it is 15-30, more preferably 18-25%, based on total ppm of shading oxides in the respective region or layer ; the concentration of Er₂O₃ in the core region (3') of the blank (1') is 70-95 %, more preferably 78- 90%, in the intermediate layer (8') it is 75-90%, more preferably 77-88 % , and in the shell region (4') it is 70-90, more preferably 74-82 %, based on total ppm of shading oxides in the respective region or layer; the concentration of MnO₂ in the core region (3') of the blank (1') is 0.001-0.5 % more preferably 0.05-0.25%, in the intermediate layer (8') it is 0.05-0.25 %, more preferably 0.05-0.20 %, and in the shell region (4') it is 0.0-2 %more preferably 0.0,based on total ppm of shading oxides in the respective region or layer ; the concentration of Co₃O₄in the core region (3') of the blank (1') is 0-5%, more preferably 0 %, in the intermediate layer (8') it is 0.05-0.30 %, more preferably 0.1-0.25 %, and in the shell region (4') it is 0.25-0.90 %, more preferably 0.40-0.85%, based on total ppm of shading oxides in the respective region or layer.

The Table 2 clearly demonstrates that in the preferred embodiments of the present invention, the core region (3') comprises a higher concentration of at least one of the following shading oxides: a shading oxide of Fe, Er, Ti, V, Cu, Pr, Tb, based on ppm, than a shell region (4') and that the shell region (4') comprises a higher concentration of at least one of the following shading oxides : a shading oxide of Mn, Co, Cr, Ni, based on ppm, than a core region (3').

The composition and the size of the at least one transition region also depends on which of the at least one shading oxide has been used in a particular region or layer.

In addition to this, the composition and the size of the at least one transition region depends on selected sintering temperature. If the sintering temperature is too high, the at least one transition region will be too thick. If the sintering temperature is too low, the at least one transition region is too thin. An optimal thickness of the at least one transition region is obtained when the sintering temperature is of 1,250-1,600° C.

The composition and the size of the at least one transition region also depends on the sintering time. The higher the sintering time is , the lower temperature is used during sintering and the at least one transition region is thinner.

The preferred thickness of the at least one transition region in the dental restoration (1) is in the range of 0.01-1.00 mm.

In the preferred embodiment of the present invention, the total light transmittance of the incisal (4) is higher than the total light transmittance of the dentin (3) by at least 2% measured at 600 nm on a 1mm thick sample, based on the CIELAB colorimetric system.

In another preferred embodiment of the present invention, the chromaticity of the incisal (4) is lower than the chromaticity of the dentin (3) by 4-5 measured at 600 nm on a 1mm thick sample, calculated as C* = √(a^{*2} + b^{*2}) by CIELAB colorimetric system.

The L*a*b* colorimetric system was standardized in 1976 by Commission Internationale de I'Eclairage (CIE). In the system, a lightness/brightness is defined as L* and expressed by a numerical value of from 0 to 100, in which L*=0 means that the color is complete black, and L*=100 means that the color is complete white.

The refractive index of the incisal (4) and the dentin (3) of the dental restoration (1) are preferably identical, the said refractive index being preferably from 2.05 to 2.2 at 600 nm measured on 4mm thick sample made out of the dentin material and a 4 mm thick sample made out of the incisal material. A spectroscopic ellipsometer SENresearch 4.0, SER800 43/038 was used for the measurement of the refractive index. In each of the samples, 5 points of measurement were identified according to the Sellmeier-Algorithm.

In the preferred embodiment of the present invention, the at least one stabilizing oxide is an oxide of an element selected from the group Y, Er, Ca, Gd, Mg, Yb, Dy, Ce, Nb, Ta, Ti and combinations thereof. In the preferred embodiment of the present invention, the concentration of a stabilizing oxide of an element different from Y in the dental restoration (1) is from 0.5 to 2 mol %.

Content of at least one oxide selected from the group comprising Nb₂O₅, Ta₂O₅ and TiO₂ in the dental restoration reduces the hardness of the dental restoration (1) and thus improves its processability. Addition of Nb₂O₅ to the composition of the incisal (4) results in its hardness reduction by up to 20%, which is beneficial mainly for the tooth or teeth which are antagonists in respect of the dental restoration.

In the preferred embodiment of the present invention, the incisal (4) comprises at least one stabilizing oxide selected from the group comprising Nb₂O₅, Ta₂O₅ and TiO₂ and combinations thereof.

In the preferred embodiment of the present invention, the amount of the at least one stabilizing oxide in the dentin (3) is lower than in the intermediate layer (8), whereas the amount of the at least one stabilizing oxide in the intermediate layer (8) is lower than in the incisal (4), calculated as wt%, based on the weight of ZrO₂ (=100%) in the particular region or layer. If the dental restoration (1) comprises only a dentin (3) and an incisal (4), then the concentration of the at least one stabilizing oxide in the dentin (3) is lower than in the incisal (4), calculated as wt% based on the weight of ZrO₂ (=100%).

The Table 3 depicts contents of the at least one stabilizing oxide in single regions of the dental restoration:

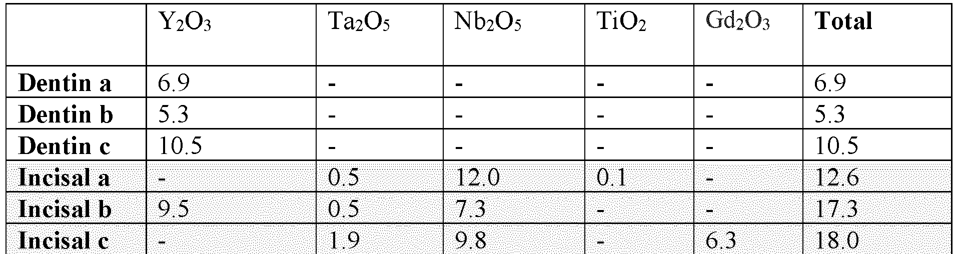

The values are wt%, based on the weight of ZrO₂ (=100%) in the particular region (dentin or incisal).

It has been found that the content of Nb₂O₅ in the incisal in the range of 7.0-13 wt%, based on the weight of ZrO₂ in the incisal, gives very good results in respect of hardness reduction of the incisal, which is particularly beneficial for the tooth or teeth which are antagonists in respect of the dental restoration. The Fig. 7 depicts hardness reduction in the section (64) of the dental restoration, which corresponds to the composition of the incisal (4) (800 HV 10 when compared with 1,250 HV 10 of the dentin). In this case, the incisal (4) comprises 12wt% of Nb₂O₅, based on the weight of ZrO₂ in the incisal.

The total amount of the at least one stabilizing oxide in the dental restoration (1) is preferably from 2-20 weight%, more preferably 3-15 weight % , most preferably 5-10 weight%, based on the total weight of the dental restoration.

The at least one shading oxide is a shading oxide of a metal element selected from the group Fe, Ti, V, Cu, Tb, Er, Co, Pr, Ni, Cr, Mn and combinations thereof.

In one of the embodiments of the present invention, are the content of the at least one shading oxide in the incisal (4) and the content of the at least one shading oxide in the dentin (3) not identical.

In one of the preferred embodiments of the present invention, the incisal (4) comprises a lower concentration of the at least one shading oxide than the dentin (3) based on ppm.

In one of the preferred embodiments of the present invention, the total of the concentration of the at least one shading oxide is higher in the dentin (3) than in the incisal (4).

The dental restoration (1) as described above comprising preferably at least 51% of the tetragonal crystal phase of zirconium dioxide, based on weight %.

In another embodiment of the present invention, the dentin (3) and/or the intermediate layer (8) comprise at least one fluorescent agent. In case the at least one fluorescent agent is Bi₂O₃ and/or Tm₂O₃, the at least one shading oxide is different from any of the oxides of Fe.

The present invention discloses a dental restoration (1) in particular a dental framework such as a dental crown, dental bridge, an inlay, an onlay, a veneer, an abutment or an abutment crown as defined above. The dental restoration (1) is formed monolithically.

## Claims

1. A dental restoration (1) such as a dental framework, in particular a dental crown, a dental bridge, an inlay, an onlay, a veneer, an abutment or an abutment crown, wherein the dental restoration comprises zirconium dioxide stabilized with at least one stabilizing oxide,
wherein the dental restoration (1) comprises a dentin (3), an incisal (4) and at least one transition region (5),
wherein the dentin (3) extends within the incisal (4),
wherein the dentin (3) and the incisal (4)) comprise each at least one shading oxide of a metal element,
wherein the dental restoration (1) is produced from a blank (1'), wherein the blank comprises a core region (3') and a shell region (4'), wherein the core region (3') and the shell region (4') comprise each at least one shading oxide of a metal element,
wherein in at least one horizontal plane (9) of the dental restoration (1) there are at least three sections of different composition, translucency, chromaticity and mechanical properties.

2. The dental restoration (1) of claim 1, wherein the dental restoration comprises a transition region (5a) between the dentin (3) and the incisal (4).

3. The dental restoration (1) of claim 2, wherein a horizontal plane (9a) comprises sections of different composition, translucency, chromaticity and mechanical properties (63), (64) and (65a).

4. The dental restoration (1) of claims 2-3 wherein a horizontal plane (9b) comprises sections of different composition, translucency, chromaticity and mechanical properties (65a) and (64).

5. The dental restoration (1) of claims 2-4 wherein a horizontal plane (9c) comprises a section of a different composition, translucency, chromaticity and mechanical properties (64).

6. The dental restoration (1) of claims 1-5, wherein the difference in the total of the concentration of the at least one shading oxide between the core region (3') and the shell region (4') of the blank (1') is in the range of 400 - 10,000 ppm.

7. The dental restoration (1) of claim 1, wherein the dental restoration comprises additionally an intermediate layer (8) and the blank (1') comprises additionally an intermediate layer (8').

8. The dental restoration (1) of claim 7 , wherein the dental restoration comprises a transition region (5b) between the dentin (3) and an intermediate layer (8) and a transition region (5c) between the intermediate layer (8) and the incisal (4).

9. The dental restoration (1) of claim 8, wherein a horizontal plane (9a) comprises sections of different composition, translucency, chromaticity and mechanical properties (63), (65b), (68), (65c) and (64).

10. The dental restoration (1) of claims 8-9, wherein a horizontal plane (9b) comprises sections of a different composition, translucency, chromaticity and mechanical properties (64), (68) and (65c).

11. The dental restoration (1) of claims 8-10, wherein a horizontal plane (9c) comprises a section of a different composition, translucency, chromaticity and mechanical properties (64).

12. The dental restoration (1) of claims 7-11, wherein the difference in the total of the concentration of the at least one shading oxide between any of the core region (3'), the shell region (4') and the intermediate layer (8') of the blank (1') is in the range of 400- 4,500 ppm.

13. The dental restoration(1) of claim 1, wherein there are two layers (3a) and (3b) of the dentin.

14. The dental restoration (1) of claim 13, wherein the dental restoration comprises a transition region (5d) between the two layers (3a) and (3b) of the dentin and a transition region (5e) between the layer (3b) and the incisal (4).

15. The dental restoration (1) of claim 14, wherein a horizontal plane (9a) comprises sections of different composition, translucency, chromaticity and mechanical properties (63a), (63b), (64) and (65d) and (65e).

16. The dental restoration (1) of claims 14-15, wherein a horizontal plane (9b) comprises sections of a different composition, translucency, chromaticity and mechanical properties (64), (63b) and (65e).

17. The dental restoration (1) of claims 14-16, wherein a horizontal plane (9c) comprises a section of a different composition, translucency, chromaticity and mechanical properties (64).

18. The dental restoration(1) according to any of the preceding claims, wherein the total light transmittance of the incisal (4) is higher than the total light transmittance of the dentin (3) by at least 2% measured at 600 nm on a 1mm thick sample, based on the CIELAB colorimetric system.

19. The dental restoration (1) of claim 18, wherein the chromaticity of the incisal (4) is lower than the chromaticity of the dentin (3) by 4-5 measured at 600 nm on a 1mm thick sample, calculated as C* = √(a^{*2} + b^{*2}) by CIELAB colorimetric system.

20. The dental restoration (1) according to any of the preceding claims, wherein the refractive index of the incisal (4) and of the dentin (3) are identical.

21. The dental restoration (1) of claim 20, wherein the refractive index is from 2.05 to 2.2 at 600 nm measured on 4mm thick sample made out of the dentin material and a 4 mm thick sample made out of the incisal material. A spectroscopic ellipsometer SENresearch 4.0 was used for the measurement of the refractive index.

22. The dental restoration (1) according to any of the preceding claims, wherein the at least one stabilizing oxide is an oxide of an element selected from the group Y, Er, Ca, Gd, Mg, Yb, Dy, Ce, Nb, Ta, Ti and combinations thereof.

23. The dental restoration (1) of claim 22, wherein the incisal (4) comprises at least one stabilizing oxide selected from the group comprising Nb₂O₅, Ta₂O₅ and TiO₂ and combinations thereof.

24. The dental restoration (1) of claim 23, wherein the incisal (4) comprises 7-13 wt%, based on the weight of ZrO₂ in the incisal, of Nb₂O₅.

25. The dental restoration (1) of claim 7-24, wherein the amount of the at least one stabilizing oxide in the dentin (3) is lower than in the intermediate layer (8), whereas the amount of the at least one stabilizing oxide in the intermediate layer (8) is lower than in the incisal (4), calculated as weight%, based on weight of ZrO₂ in the particular region or layer.

26. The dental restoration (1) of claims 22-25, wherein the total amount of the at least one stabilizing oxide in the dental restoration is 2-20 weight%, based on the total weight of the dental restoration.

27. The dental restoration (1) according to any of the preceding claims, wherein the at least one shading oxide is a shading oxide of a metal element selected from the group Fe, Ti, V, Cu, Tb, Er, Co, Pr, Ni, Cr, Mn and combinations thereof.

28. The dental restoration according to claim 27, wherein the content of the at least one shading oxide in the incisal (4) and the content of the at least one shading oxide in the dentin (3) are not identical.

29. The dental restoration (1) of claims 27-28, wherein the core region (3') comprises a higher concentration of at least one of the following shading oxides: a shading oxide of Fe, Er, Ti, V, Cu, Pr, Tb, based on ppm, than the shell region (4').

30. The dental restoration (1) of claims 27-29, wherein the shell region (4') comprises a higher concentration of at least one of the following shading oxides : a shading oxide of Mn, Co, Cr , Ni, based on ppm, than a core region (3').

31. The dental restoration (1) according to any of the preceding claims, wherein the thickness of the at least one transition region (5) is in the range of 0.01-1.00 mm.

32. The dental restoration (1) according to any of the preceding claims, wherein the dental restoration comprises at least 51% of the tetragonal crystal phase of zirconium dioxide, based on weight%.

33. The dental restoration (1) according to claims 1-32, wherein the dentin (3) comprises at least one fluorescent agent.

34. The dental restoration (1) according to claim 33, wherein the at least one fluorescent agent is Bi₂O₃ and/or Tm₂O₃ and the at least one shading oxide is different from any of the oxides of Fe.

35. The dental restoration (1) in particular a dental crown, a dental bridge, an inlay, an onlay, a veneer, an abutment or an abutment crown according to claims 1-34, wherein the dental restoration (1) is formed monolithically.
